# EUROPEAN PATENT APPLICATION

(11) **EP 4 145 643 A1**
(43) Date of publication of application: **08.03.2023**
(21) Application number: 22200267.7
(22) Date of filing: 31.10.2019
(51) Int. Cl.: H01R 13/514, H01R 13/52, H01R 13/502, H01R 31/06, H02K 5/04, H02K 5/22, H02K 7/116, H02K 11/215, F16K 27/04, F16K 27/06, F16K 31/04, H01R 12/70, H01R 13/506, H01R 13/73, H01R 107/00

(54) **ADAPTION OF A MULTI PURPOSE ACTUATOR**

(30) Priority: 13.11.2018 US 201816188648
(62) Divisional of application: 19883786.6
(71) Applicant: Hanon Systems, Daejeon 34325 (KR)
(72) Inventor: SOUBJAKI, Houssam, 48070 Michigan (KR); CROWTHER, David, 48304 Michigan (KR)
(74) Representative: Hoffmann Eitle

(57) **Abstract**

A system of universal actuators and components comprises:
a first component with a rotational element;
a second component with a rotational element, the second component having a configuration different from a configuration of the first component;
a first connector coupled to the first component; and
a first universal actuator incompatible for directly coupling to the first component, the first universal actuator configured to interchangeably provide rotational movement to the rotational element of the first component and the rotational element of the second component, the first universal actuator selectively indirectly coupled to the first component via the first connector or one of directly or indirectly coupled to the second component.

## Description

### Technical Field

This disclosure relates generally to an actuator for a component with a rotational element, and more specifically to a connector for coupling a universal actuator to various types of components of a vehicle.

### Background Art

As known, components with rotational elements, such as those requiring an output shaft, are employed in vehicles to operate, drive, or control various systems of the vehicle. For example, such components with a rotational axis include louvres, dampers, and valves of the ball, butterfly, barrel, check, globe or similar type. The components may be employed in a refrigerant system, a coolant system, an engine system, or other system of the vehicle. An actuator in communication with the component converts energy to provide rotary motion to the rotational element of the component to control operation of the component.

Disadvantageously, in vehicles, the configuration of each of the actuators in the vehicle is structurally dependent on the specific application of the component. Particularly, the application specific actuators are structurally limited based on the functional and packaging requirements of the corresponding component. For example, a configuration of an actuator for a refrigerant valve is different from a configuration of an actuator for a coolant valve. Features such as a mounting hole pattern of the actuator, a type of a connector for connecting the actuator to the component, a location of the connector with respect to the actuator, a size or shape of the actuator, a material of the actuator, and arrangement of internal components of the actuator may differ from component to component depending on the application.

As a result of the application specific actuators, costs are increased due to excessive application excessive tooling required to manufacture the actuators and assembly of the actuators to the components. Additionally, maintenance and repair costs are increased due to the differing configuration of one actuator from another actuator in the vehicle.

Therefore, it is desired to have a connector for coupling non-application specific actuators to various application specific components, wherein a cost and inefficiency of manufacturing and assembly is minimized.

### Disclosure of Invention

### Solution to Problem

In accordance and attuned with the present invention, a connector for coupling non-application specific actuators to various application specific components, wherein a cost and inefficiency of manufacturing and assembly is minimized has surprisingly been discovered.

According to an embodiment of the disclosure, a connector for coupling an actuator to a component includes a receptacle. The receptacle is configured to receive a portion of the actuator and couple the actuator to the component. The connector further includes a socket. The socket provides electrical communication to the actuator. The socket includes a plurality of electrical connector pins.

According to another embodiment of the disclosure, an actuator and connector assembly for coupling to a component with a rotational element is disclosed. The actuator is incompatible for directly coupling with the component. The actuator includes a housing and internal components received in the housing. The internal components are configured to cause rotational movement of the rotational element of the component. A connector is coupled to the actuator and compatible for coupling to the component. The connector is configured to provide communication between the actuator and the component.

According to yet another embodiment of the disclosure, a system of universal actuators and components is disclosed. The system includes a first component with a rotational element and a second component with a rotational element. The second component has a configuration different from a configuration of the first component. A first connector is coupled to the first component. The system further includes a first universal actuator incompatible for directly coupling to the first component. The first universal actuator is configured to interchangeably providing rotational movement to the rotational element of the first component and the rotational element of the second component. The first universal actuator is selectively indirectly coupled to the first component via the first connector or one of directly or indirectly coupled to the second component.

### Brief Description of Drawings

The above objects and advantages of the invention, as well as others, will become readily apparent to those skilled in the art from reading the following detailed description of an embodiment of the invention when considered in the light of the accompanying drawings, in which:
FIG. 1 illustrates an assembled top perspective view of an actuator and connector assembly coupled to a component according to an embodiment of the disclosure;
FIG. 2 is a partially exploded top perspective view of the actuator and connector assembly and the component of FIG. 1;
FIG. 3 is a exploded bottom perspective view of a housing of an actuator and a connector of the actuator and connector assembly of FIGS. 1 and 2;
FIG. 4 is an exploded top perspective view of the housing of the actuator and the connector of FIG. 3;
FIG. 5 illustrates an assembled top perspective view of an actuator and connector assembly coupled to a component according to another embodiment of the disclosure;
FIG. 6 is a top perspective view of a connector of the actuator and connector assembly of FIG. 5; and
FIG. 7 is a bottom perspective view of the connector of the actuator and connector assembly of FIG. 6.

### Best Mode for Carrying out the Invention

The following detailed description and appended drawings describe and illustrate various exemplary embodiments of the invention. The description and drawings serve to enable one skilled in the art to make and use the invention, and are not intended to limit the scope of the invention in any manner. In respect of the methods disclosed, the steps presented are exemplary in nature, and thus, the order of the steps is not necessary or critical unless otherwise noted. As used herein, "substantially" means "to a considerable degree," "largely," or "proximately" as a person skilled in the art in view of the instant disclosure would understand the term. Spatially relative terms, such as "inner," "outer," "bottom," "top," "horizontal," "vertical," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures.

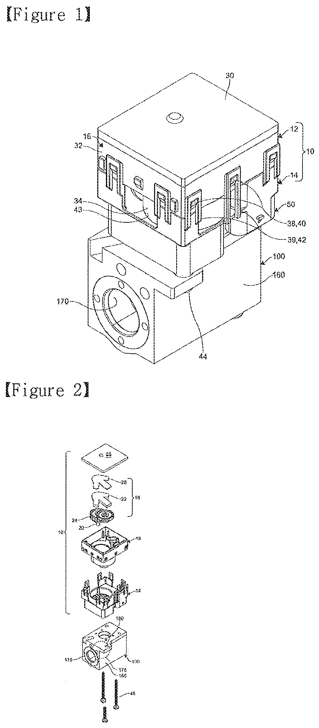

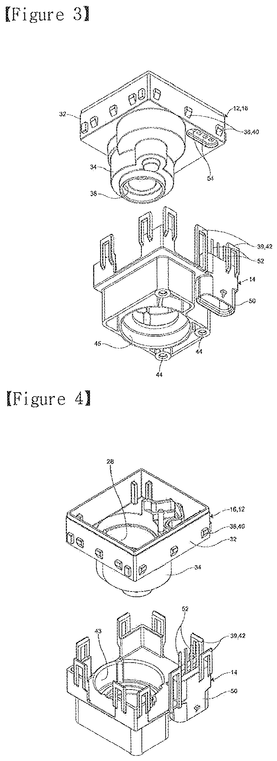

FIGS. 1-4 illustrate an actuator and connector assembly 10 for coupling to a component 100 with a rotational element 175 (as schematically represented by the dashed lines). For example, the component 100 may be a valve with a flap, a disc, a ball, a barrel, a rotor, a threaded shaft or similar internal component configured to rotate about a rotational axis to cause an internal passageway of the valve to be selectively sealed. However, the component 100 can be any other component having a rotational element.

The actuator and connector assembly 10 includes a universal base actuator 12 and a connector 14. As used herein, the term "universal" means the actuator 12 includes a single nonapplication specific configuration and can be adapted, via the connector 14, to be coupled to or otherwise communicate with various types or configurations of the component 100 incompatible for coupling to the actuator 12 without modifying a structural arrangement or features of the actuator 12. The actuator 12 includes a housing 16 and internal components 18. The internal components 18 can include, but are not limited to, a common shaft 20, a drive assembly 22 (schematically represented by a trilobal shape), a gear assembly 24, and a printed circuit board (PCB) 26 (schematically represented by a trilobal shape) which are at least partially enclosed by the housing 16. The shaft 20 is configured to engage the component 100 to cause rotation of the rotational element 175. The drive assembly 22 includes a motor such as a direct current or alternating current electrical motor, for example, and a pinion coupled to a rotor of the motor. A rotational output of the drive assembly 22 is translated to the shaft 20 via the gear assembly 24. The gear assembly 24 includes a plurality of gears such as cogwheels or sprockets. However, it is understood rotational motion may be transmitted from the drive assembly 22 to the gear assembly 24 by additional or alternate means such as frictional clutches, belts, chains, worm gears, and fluid couplings. The PCB 26 is in electrical communication with the motor and/or sensors of the drive assembly 22 and the gear assembly 24 to send and receive signals thereto and therefrom to control the actuator 12. It is also understood, the internal components 18 of the actuator 12 can have any other structural arrangements, configurations, or dimensions as desired.

The housing 16 includes a cavity 28 configured to receive at least a portion of the internal components 18 and a cover 30 for enclosing the cavity 28. In the embodiment illustrated, the housing 16 includes a main first portion 32 and a protruding second portion 34. The first portion 32 is configured for retaining portions of the internal components 18 such as the drive assembly 22 and the PCB 26, for example. The second portion 34 extends outwardly from a bottom surface of the main first portion 32. The second portion 34 is configured to retain a portion of the internal components 18 such as a portion of the gear assembly 24, for example. An aperture 36 is formed through a bottom surface of the second portion 34 and is configured to receive a portion of the internal components 18 of the actuator 12, such as the shaft 20. Portions of an exterior shape and contour of the housing 16 and an interior shape and contour of the housing 16, including depressions and walls, correspond substantially with an exterior contour and shape of the internal components 18.

The housing 16 includes engagement feature 38 configured for coupling the actuator 12 to engagement feature 39 of the connector 14. In the embodiment illustrated, the engagement feature 38 is a plurality of windows or tabs 40 of a snap-fit type configured for engaging with windows 42 formed on the connector 14 to form a snap fit joint between the housing 16 and the connector 14. In another embodiment, the tabs 40 can be formed on the connector 14 and the windows 42 formed on the housing 16. However, it is understood the engagement features 38 can be other engagement features configured for coupling the housing 16 to the connector 14. For example, the engagement feature 38 can be a plurality of pins or anchors for engaging windows or catches of the connector 14 or a plurality of bolts or screws for engaging holes in the connector 14 In another embodiment, the housing 16 can be coupled to the connector 14 by other means such as a friction fit, wherein an outer surface the housing 16 frictionally engages with the inner surface of the connector 14 or vice versa, or threaded engagement, wherein threads are formed on an outer surface of the housing 16 to engage with threads formed on an inner surface of the connector 14 or vice versa. It is understood, other engagement means can be contemplated without departing from the instant disclosure.

The connector 14 is configured as a receptacle defining a cavity 43 for receiving at least the second portion 34 of the housing 16. As a result, the housing 16 and the connector 14 form a male-to-female connection, wherein the housing 16 is the female portion and the connector 14 is the male portion. An aperture 45 is formed through a bottom of the connector 14 for receiving a portion of the internal components 18, particularly the shaft 20 therethrough, wherein the shaft 20 extends through the aperture 45 and outwardly from a bottom surface of the connector 14 to engage the component 100. The engagement features 39 of the connector 14 engage the engagement features 38 of the housing 16 to couple the housing 16 to the connector 14.

The connector 14 is formed from a plastic material from a molding or additive process, for example. Although the connector 14 can be formed from other materials or other processes, as desired. A configuration of the connector 14 is application specific and is adaptable to correspond to a particular type of the component 100. A coupling feature such as a plurality of holes 44 is formed in the bottom of the connector 14 for receiving a plurality of fasteners 46 therein for coupling the connector 14 to the component 100. In the embodiment illustrated, three of the holes 44 are formed in the bottom of the connector 14 for receiving three of the fasteners 46. However, it is understood the number of the holes 44 and the fasteners 46 can be greater or fewer than three depending on the component 100 and the configuration of the connector 14.

A socket 50 is integrally formed with the connector 14. The socket 50 contains at least a portion of a plurality of electrical connector pins 52. In the embodiment illustrated, the socket 50 and the pins 52 are arranged substantially vertically, wherein an axis extending through an opening defined by the socket 50 is parallel to an axis extending through the aperture 45 of the connector 14. However, the socket 50 and the pins 52 can be arranged alternatively depending on the configuration of the connector 14, the type of the component 100, and the application the component 100 is being employed with. For example, the socket 50 and the pins 52 can be arranged horizontally or at an angle with respect to the axis extending through the aperture 45 of the connector 14. Additionally, the socket 50 and the pins 52 can be arranged in a combination of horizontally, vertically, or at an angle with respect to the axis extending through the aperture 45 of the connector 14. Other configurations of the socket 50 and pins 52 with respect to the connector 14 can be contemplated depending on the application of the actuator and connector assembly 10.

The pins 52 extend outwardly from the socket 50 and extend through the housing 16 of the actuator 12 through pinholes 54. The pins 52 terminate at a terminal end in the housing 16 of the actuator 12 with a compliant pin geometry for inserting into and corresponding to the PCB 26 which is received in the housing 16 of the actuator 12. An opposing terminal end terminates in the socket 50 of the connector 14. The opposing terminal end in the socket 50 is configured for engaging an electrical conductor such as a cord, plug, or cable, for example, oriented, configured, and adapted per application requirements.

In the embodiment illustrated, the component 100 is a valve employed in a refrigerant circuit of the vehicle and the connector 14 is configured specifically to correspond to and couple to the valve of the refrigerant circuit. However, the component 100 can be any valve such as a valve for a coolant circuit of the vehicle, an air flow circuit of the vehicle, or any other valve or component with a rotational element. The connector 14 is then configured specifically to correspond to and couple to each one of the varying components 100 for the particular application of the component 100. The configuration of the actuator 12 remains the same for each various configuration of the connector 14 and the component 100. Therefore, the component 100 and the connector 14 illustrated are examples of the component 100 configured as the refrigerant valve and the connector 14 specifically configured for connection to the refrigerant valve.

The component 100 is incompatible with the actuator 12, meaning the actuator 12 is unable to be directly coupled to the component 100 due to structural or coupling incompatibilities preventing the actuator 12 from being directly coupled to the component 100. The component 100 illustrated includes a housing 160 defining a flow conduit 170 for conveying a fluid therethrough. The component 100 includes the rotational element 175 such as a ball valve to selectively close and open the flow conduit 170. The shaft 20 of the internal components 18 engages with the rotational element 175 of the component 100 to transfer torque from the shaft 20 to the rotational element 175. The housing 160 includes a plurality of holes 180 for receiving the fasteners 46 therethrough. The number of holes 180 formed in the housing 160 correspond to the number of the fasteners 46 and align with the holes 44 formed in the connector 14.

To assemble the actuator and connector assembly 10, the actuator 12 is formed separately from the connector 14. The internal components 18 are received in the housing 16 of the actuator 12, wherein the shaft 20 extends outwardly from a bottom of the housing 16. The second portion 34 of the housing 16 is received in the connector 14, wherein the shaft 20 extends through the connector 14. The pins 52 of the socket 50 align with and extend through the pinholes 54 of the housing 16 of the actuator 12 to engage the PCB 26. The engagement features 39 of the connector 14 engage the engagement features 38 of the housing 16 to couple the housing 16 to the connector 14.
The connector 14 is coupled to the component 100 with the fasteners 46. The electric conductor engages the socket 50 to provide electrical communication to the PCB 26.

In application, in the same vehicle, the common actuator 12 is the same configuration for varying applications, whereas the component 100 varies depending on the application and the connector 14 varies depending on the corresponding component 100 and the application. The drive assembly 22, which is electrically activated via the PCB 26 and electrical conductor, is mechanically coupled to the gear assembly 24 to cause the shaft 20 to rotate. As a result, the rotational element 175 of the component 100 rotates.

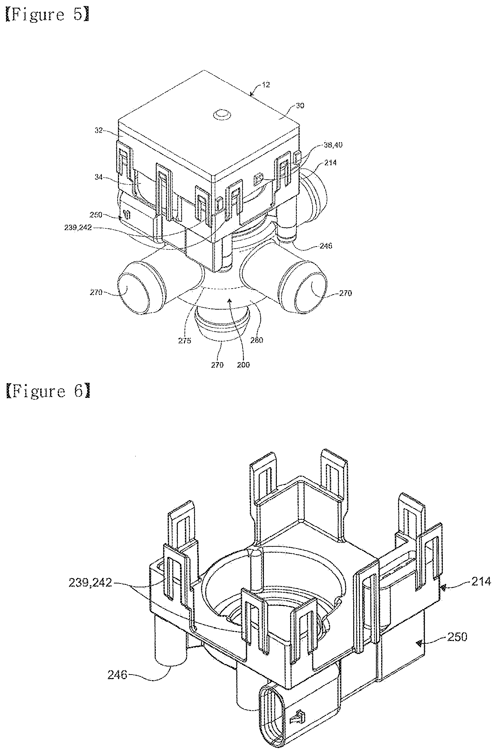

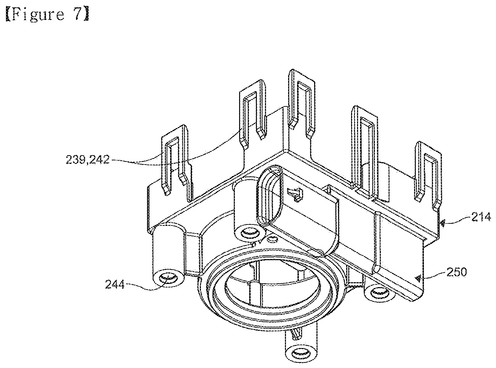

FIGS. 5-7 illustrate an actuator and connector assembly 210 according to another embodiment of the disclosure to illustrate another example of the actuator 12 employed with an application specific connector 214 and a component 200. The actuator 12 of FIG. 5 is the same as the actuator 12 of FIGS. 1-4. Therefore, the same reference numerals of FIGS. 1-4 used to describe the actuator 12 are used to describe the actuator 12 of FIGS. 5-6. The connector 214 and the component 200 of FIGS. 5-6 are different from the connector 14 and the component 200 of FIGS. 1-4. However, features of the connector 214 and the component 200 of FIGS. 5-6 similar to the features of the connector 214 and the component 200 of FIGS. 1-4 include the same reference numerals except with a leading "2," for convenience.

The connector 214 is substantially the same as the connector 214 of FIGS. 1-4 except the connector 214 includes four of the holes 244 for receiving four of the fasteners 146 for coupling the connector 214 to the component 200. Additionally, the outer contour and shape of the connector 214 is different to adapt to the particular component 200. In the embodiment illustrated, the socket 250, and the corresponding pins 252, is oriented in both a horizontal direction and a vertical direction, wherein a first portion of the socket 250 extends horizontally to horizontally engage with the electrical conductor and a second portion of the socket 250 extend vertically to extend into the actuator 12. An internal contour of the connector 214 defining the cavity 243 is substantially the same as the inner contour of the connector 14 of FIGS. 1-4.

In the example shown, the component 200 is a valve for a coolant circuit of the vehicle. The housing 260 of the component 200 includes the holes 280 for receiving the fasteners 146. The component 200 is configured as a multi-way valve wherein the rotational element 275 such as a cylindrical element is coupled to the shaft 20 of the internal components 18 of the actuator 12.

Advantageously, the actuator and connector assembly 10, 210 of the present disclosure permits the universal actuator 12, which is otherwise incompatible with various ones of the component 100, 200, to be coupled to the component 100, 200 via the connector 14, 214. As a result, a separate actuator is not needed for each different application and component. Various actuators do not have to be manufactured to conform to the desired component, thus minimizing manufacturing costs and inefficiency. As a result, in a vehicle, wherein a system of various ones of the components 100, 200 are employed to operate portions of the vehicle, the same actuator 12, or multiple actuators with the same configurations, can be coupled to each varying one of the components 100, 200 with the application specific connector 14, 214.

The foregoing discussion discloses and describes merely exemplary embodiments of the present disclosure. One skilled in the art will readily recognize from such discussion and from the accompanying drawings and claims that various changes, modifications and variations can be made therein without departing from the spirit and scope of the disclosure as defined in the following claims.
The following numbered items describe further embodiments of the invention.
[Item 1] A connector for coupling an actuator to a component, comprising:
   a receptacle configured to receive a portion of the actuator and couple
   the actuator to the component; and
   a socket providing electrical communication to the actuator.
[Item 2] The connector of Item 1, wherein the receptacle includes an aperture formed in a bottom thereof for receiving a portion of the actuator therethrough.
[Item 3] The connector of Item 1, wherein the receptacle includes an engagement feature formed thereon for engaging the actuator.
[Item 4] The connector of Item 3, wherein the engagement feature is one a plurality of tabs and a plurality of windows.
[Item 5] The connector of Item 1, wherein the receptacle is formed from a plastic.
[Item 6] The connector of Item 1, wherein a plurality of electrical connector pins is received in the socket.
[Item 7] The connector of Item 1, wherein the receptacle includes a coupling feature for coupling to the component.
[Item 8] The connector of Item 7, wherein the coupling feature is a plurality of holes for receiving a plurality of fasteners.
[Item 9] An actuator and connector assembly for coupling to a component with a rotational element comprising:
   an actuator incompatible for directly coupling with the component, the actuator including a housing and internal components received in the housing, the internal components configured to cause rotational movement of the rotational element of the component; and
   a connector coupled to the actuator and compatible for coupling to the component, the connector configured to provide communication between the actuator and the component.
[Item 10] The actuator and connector assembly of Item 9, wherein the component is a valve with a rotational element.
[Item 11] The actuator and connector assembly of Item 9, wherein the internal components include a shaft, a drive assembly, a gear assembly, and a printed circuit board.
[Item 12] The actuator and connector assembly of Item 9, wherein the connector includes a socket providing electrical communication to the actuator.
[Item 13] The actuator and connector assembly of Item 12, wherein the socket includes a plurality of electrical connector pins disposed therein and extending into the actuator.
[Item 14] The actuator and connector assembly of Item 9, wherein the housing includes an engagement feature cooperating with an engagement
   feature of the connector to couple the actuator to the connector.
[Item 15] The actuator and connector assembly of Item 14, wherein the engagement feature of the housing is a plurality of tabs and the engagement feature of the connector is a plurality of windows receiving the plurality of tabs.
[Item 16] The actuator and connector assembly of Item 9, wherein the connector is formed from a plastic.
[Item 17] The actuator and connector assembly of Item 9, wherein a portion of the internal components extends through an aperture formed in a bottom of the housing of the actuator and an aperture formed in a bottom of the connector.
[Item 18] A system of universal actuators and components comprising:
   a first component with a rotational element;
   a second component with a rotational element, the second component having a configuration different from a configuration of the first component;
   a first connector coupled to the first component; and a first universal actuator incompatible for directly coupling to the first component, the first universal actuator configured to interchangeably provide rotational movement to the rotational element of the first component and the rotational element of the second component, the first universal actuator selectively indirectly coupled to the first component via the first connector or one of directly or indirectly coupled to the second component.
[Item 19] The system of Item 18, wherein the first universal actuator is incompatible for directly coupling to the second component, the first universal actuator selectively indirectly coupled to the first component via the first connector or indirectly coupled to the second component via a second connector, wherein the second connector has a configuration different from a configuration of the first connector.
[Item 20] The system of Item 19, further comprising a second universal actuator having a configuration the same as a configuration of the first universal actuator, the first universal actuator coupled indirectly to the first component via the first connector and the second universal actuator coupled indirectly to the second component via a second connector.

## Claims

1. A system of universal actuators and components comprising:
a first component with a rotational element;
a second component with a rotational element, the second component having a configuration different from a configuration of the first component;
a first connector coupled to the first component; and
a first universal actuator incompatible for directly coupling to the first component, the first universal actuator configured to interchangeably provide rotational movement to the rotational element of the first component and the rotational element of the second component, the first universal actuator selectively indirectly coupled to the first component via the first connector or one of directly or indirectly coupled to the second component.

2. The system of Claim 1, wherein the first universal actuator is incompatible for directly coupling to the second component, the first universal actuator selectively indirectly coupled to the first component via the first connector or indirectly coupled to the second component via a second connector, wherein the second connector has a configuration different from a configuration of the first connector.

3. The system of Claim 2, further comprising a second universal actuator having a configuration the same as a configuration of the first universal actuator, the first universal actuator coupled indirectly to the first component via the first connector and the second universal actuator coupled indirectly to the second component via a second connector.

4. The system of claim 1, wherein the first connector comprises
a receptacle configured to receive a portion of the first universal actuator and couple the first universal actuator to the first component; and
a socket providing electrical communication to the first universal actuator.

5. The system of claim 4, wherein the receptacle includes an aperture formed in a bottom thereof for receiving a portion of the first universal actuator therethrough.

6. The system of claim 4, wherein the receptacle includes an engagement feature formed thereon for engaging the actuator.

7. The system of claim 6, wherein the engagement feature is one a plurality of tabs and a plurality of windows.

8. The system of claim 4, wherein the receptacle is formed from a plastic.

9. The system of claim 4, wherein a plurality of electrical connector pins is received in the socket.

10. The system of claim 4, wherein the receptacle includes a coupling feature for coupling to the component.

11. The system of claim 10, wherein the coupling feature is a plurality of holes for receiving a plurality of fasteners.

12. The system of claim 18, wherein the first universal actuator includes a housing and internal components received in the housing, the internal components configured to cause rotational movement of the rotational element of the first component.

13. The system of claim 12, wherein the first component is a valve with a rotational element.

14. The system of claim 12, wherein the internal components include a shaft, a drive assembly, a gear assembly, and a printed circuit board.

15. The system of claim 12, wherein the housing includes an engagement feature cooperating with an engagement feature of the first connector to couple the first universal actuator to the first connector.

16. The system of claim 15, wherein the engagement
feature of the housing is a plurality of tabs and the engagement feature of the first connector is a plurality of windows receiving the plurality of tabs.

17. The system of claim 12, wherein a portion of the internal components extends through an aperture formed in a bottom of the housing of the first universal actuator and an aperture formed in a bottom of the first connector.
